# EUROPEAN PATENT APPLICATION

(11) **EP 3 722 234 A1**
(43) Date of publication of application: **14.10.2020**
(21) Application number: 20168489.1
(22) Date of filing: 07.04.2020
(51) Int. Cl.: B65G 69/00

(54) **SEALING ASSEMBLY FOR A DOCK, DOCK AND DISTRIBUTION CENTER PROVIDED THEREWITH, AND METHOD FOR SEALING A VEHICLE AT A DOCK**

(30) Priority: 08.04.2019 NL 2022891
(71) Applicant: STERTIL B.V., 9288 CA Kootstertille (NL)
(72) Inventor: FIJNVANDRAAT, Jan Willem, 8935 DG Leeuwarden (NL)
(74) Representative: Arnold & Siedsma

(57) **Abstract**

The invention relates to a sealing assembly (20), a dock (2) and distribution center (4) provided therewith, and a method for sealing a vehicle (6) at a dock. The sealing assembly comprises:
- a frame (46) provided with connectors for connecting the sealing assembly to the dock;
- a sealing element having an upper edge (38) with the sealing element arranged for moving between a rectracted non-sealing position and a sealing position;
- a drive configured for moving the sealing element between the sealing and retracted positions;
- a deformable sealing cushion (40) configured for sealing against a vehicle; and
- a sealing pressure element (48) that is operatively connected to the sealing element and is configured to provide a substantially constant and continuous sealing pressure from the sealing element.

## Description

The present invention relates to a sealing assembly for a dock. Such dock is used for loading and/or unloading goods from a vehicle, such as a truck. These docks are used in distribution centers, for example. Such dock is configured for sending and/or receiving loads, including packages, parcels, consumable materials, and fresh or frozen products. Such dock is specifically designed to receive a truck or a trailer for loading and/or unloading. The dock may include a dock house, a dock leveler, a dock shelter and components thereof.

Conventional docks are known in practice. Especially when these docks are used for loading and/or unloading fresh or frozen products, the opening is sealed against the vehicle or trailer. This may involve the use of inflatable seals, for example.

One of the problems with conventional docks is the energy loss at the bottom of the dock. This is due to the different types of vehicles and trailers that are used in practice. Although often height and width of the truck or trailer is similar between vehicles, the height from the ground floor to the bottom of the cargo space of the vehicle or trailer differs between vehicles. Furthermore, this height of the cargo space bottom above the ground floor depends on the actual load inside the cargo space. In addition, when loading and/or unloading takes place, often lifting trucks or other heavy equipment is used. Such heavy equipment changes the height of the cargo space bottom above the ground floor during loading and/or unloading. In practice this results in insufficient sealing that leads to energy loss, and may even lead to product damage.

An object of the invention is to obviate or at least reduce some of the above problems and to provide an effective sealing assembly for a dock, especially related to the lower side of the dock opening.

This object is achieved with the sealing assembly for a dock according to the present invention, wherein the sealing assembly comprises:
- a frame provided with connectors for connecting the sealing assembly to the dock;
- a sealing element having an upper edge with the sealing element arranged for moving between a retracted non-sealing position and a sealing position;
- a drive configured for moving the sealing element between the sealing and retracted positions;
- a deformable sealing cushion configured for sealing against a vehicle; and
- a sealing pressure element that is operatively connected to the sealing element and is configured to provide a substantially constant and continuous sealing pressure from the sealing element.

The sealing assembly is connectable with connectors to a dock. The connectors enable mounting and dismounting the frame of the sealing assembly to a dock. This allows for providing the sealing assembly to a conventional dock and/or replacing or remounting the sealing dock in an effective manner.

The sealing assembly according to the invention comprises a sealing element. The sealing element has an upper edge to which a sealing cushion is arranged. The sealing element is movable between a retracted non-sealing position and a sealing position. This movement is achieved with a drive that is configured for moving the sealing element between the at least two positions. In the retracted position the dock opening is open, while in the sealing position of the sealing element the sealing assembly seals against the leveler, shelter and/or rear bottom of a vehicle or trailer that is parked at a dock. In a presently preferred embodiment, when moving the sealing assembly from the sealing position to the retracted position, the sealing assembly is moved substantially below the floor of the dock. In this retracted position, the sealing assembly preferably extends in a substantial horizontal direction. The drive can be provided in different embodiments, including a hydraulic drive, electric drive, pneumatic drive, or combinations thereof. The deformable sealing cushion provides an effective sealing against the bottom of the cargo space of the vehicle or trailer. Due to the deformable character of the sealing cushion irregularities at the bottom of the cargo space can be dealt with effectively.

In one of the presently preferred embodiments the drive is configured for moving the sealing assembly from the retracted position, wherein it extends in a substantially horizontal position, to the sealing position, wherein it extends in a substantially vertical direction. Optionally, this may involve the use of a cylinder, weight, guide, motor and/or other suitable elements for achieving the desired movement.

According to the invention, the sealing assembly further comprises a sealing pressure element that is operatively connected to the sealing element. This sealing pressure element is configured for providing a substantially constant and continuous pressure from the sealing element on the vehicle. Due to this sealing pressure element it is possible to provide a sealing force of the sealing assembly against the bottom of the cargo space of the vehicle that is substantially constant and provides a continuous pressure. This guarantees an effective and efficient sealing against the bottom of the vehicle. Furthermore, it enables dealing with different types of vehicles and trailers. Especially differences in height between the ground floor and bottom end of the cargo space can be easily dealt with, while still providing an effective and efficient sealing functionality. Also, dealing with dynamic height differences during loading and/or unloading caused by the use of heavy equipment such as lifting trucks can be dealt with using the sealing assembly according to the present invention. This is achieved by the sealing assembly being capable of providing a substantially constant and continuous pressure by the sealing element against the vehicle, leveler and/or shelter (or other dock parts such as the bumpers). This substantially constant and substantially continuous pressure guarantees the effective sealing. Preferably, the sealing assembly according to the invention seals between the vehicle, leveler, shelter and dock (preferably the so-called iso-panel thereof).

Furthermore, when parked at the dock, vehicles and trailers are not parked exactly on the desired location. It is shown that the sealing assembly according to the invention is also capable of dealing with so-called parking position differences in an effective manner, while still providing sufficient sealing with a substantially constant and continuous pressure from the sealing element on the vehicle.

The sealing assembly according to the present invention improves the sealing and significantly reduces heat losses, especially in working/use conditions as it is capable of dealing with different vehicle types and even with different parking positions. In addition, it is capable of dealing with dynamic changes due to the use of heavy equipment during loading and/or unloading, for example.

A further advantage of the sealing assembly according to the invention is that it allows to seal against different vehicle types, including vehicles with a so-called tail lift to which is also referred to as liftgate. These lifts are positioned below the dock to enable using the dock equipment, such as a leveler and sealing equipment. Therefore, the sealing assembly according to the invention provides an effective sealing, even in case different vehicle types are handled at a dock.

In a preferred embodiment of the invention the sealing pressure element comprises one or more weights.

By providing one or more weights the sealing pressure element effectively provides a pressure of the sealing cushion to the vehicle that is substantially constant and substantially continuous. This further improves the robustness of the sealing functionality. It will be understood that also other embodiments using weights or as an alternative thereto, or in combination therewith, springs or similar elements, may improve this failsafe functionality. This also guarantees an effective and efficient sealing that maintains its effective sealing functionality over its entire lifetime. When activated the weights move the sealing element from the retracted to the sealing position.

Preferably, this sealing pressure element further comprises one or more pulleys. The use of these pulleys improves the capability of the sealing assembly to provide the substantially constant and continuous pressure from the sealing element on the vehicle on different types of vehicles, with different loads, different bottom positions, and is capable of dealing with the dynamic changes during loading and/or unloading. In fact, the combination of providing the sealing pressure element with weights and pulleys provides a type of continuous (dynamic) adjustment or adaptation to substantially maintain the desired pressure against the vehicle. This guarantees a fail-safe, effective and robust sealing, also during loading and/or unloading, for example.

In a preferred embodiment of the invention the drive comprises a cylinder.

By providing a cylinder an effective drive can be accomplished. The cylinder can either be driven hydraulically, electrically or pneumatically. In a presently preferred embodiment the cylinder is placed below the dock opening such that no additional space is required.

In a presently preferred embodiment of the sealing assembly comprising such a cylinder it further comprises an engagement mechanism that is configured for engaging or connecting the cylinder to the sealing element such that it can be used between the actual end positions of the cylinder.

By providing an engagement mechanism the cylinder can be operated between its end positions. In a retracted position of the cylinder, the sealing assembly is kept in its retracted (lower) position. When activated, the drive moves the sealing assembly to its sealing (upper) position, for sealing against the rear of a vehicle, leveler and/or shelter. The engagement mechanism enables dealing with varying heights of the bottom of the cargo space relative to the dock floor and, more specifically, assures that the piston of the cylinder does not move with the sealing mechanism. Due to the use of the engagement mechanism the cylinder is capable of reaching its end position with maximum stroke, while the sealing element stops as it engages a structural element such as the cargo space bottom, leveler and/or shelter. This improves the failsafe functionality of the cylinder and the cylinder assembly as a whole.

In one of the presently preferred embodiments the cylinder is in a float condition when moving from the retracted to the sealing position. This allows the weights to drive the seal to the sealing position. In addition, the gravitational load (by the weights) will allow the sealing assembly to follow movement of the vehicles, for example during loading and unloading. This achieves an effective seal between vehicle, leveler, shelter and dock (iso-panel). The engagement mechanism allows the cylinder to move to its end position independent from the vehicle type. In addition, the engagement mechanism allows the sealing assembly to follow movement of the vehicle, for example during loading and/or unloading.

This engagement mechanism can be embodied in different forms as would be known to a skilled person. Furthermore, providing this engagement mechanism guarantees that a similar pressure is put on the sealing element irrespective of the vehicle type, for example. This improves the sealing efficiency.

In one of the presently preferred embodiments the cylinder is provided with a home position detector that is capable of detecting when the cylinder reaches this home position. For example, in case of a leakage, even a small leakage, this cylinder can be retracted to its home position in a guaranteed manner. This provides the safety of the sealing assembly.

In a further preferred embodiment of the invention, the sealing assembly comprises releasing connectors for releasable connecting the cushion to the upper edge.

Providing the releasing connectors enables a relatively easy mounting/dismounting of the cushions from the upper edge. This enables an efficient repair, maintenance, and also adjustment to different vehicle types. These connectors may involve a snap-on mechanism and/or can be slided over a guiding rail or shaft, and/or involve other suitable means. Optionally, a fixation means, such as a screw, can be applied to fixate the cushion at the desired location.

In a further preferred embodiment the cushion comprises separate cushion parts. This further improves mounting/dismounting the cushion. In addition, it renders transport and storage easier due to the reduced size of the individual cushion parts. Furthermore, in case of repair or replacement, only the relevant cushion parts need to be dismounted. This renders repair and maintenance more efficient and more cost effective.

In a further preferred embodiment the deformable sealing cushion comprises an inflatable cushion.

By providing an inflatable cushion the sealing functionality can be achieved effectively.

In a preferred embodiment the sealing assembly comprises a fan that is adapted for inflating the inflatable cushion. This fan is preferably provided attached to or mounted close to the frame of the sealing assembly. The advantage of using a separate fan is that a sort of stand-alone sealing assembly is achieved that only requires a power connection. This renders installation of a sealing assembly easier and, in addition, enables providing a sealing assembly to conventional docks.

In a further preferred embodiment of the invention the deformable sealing cushion comprises a foam cushion.

By providing a foam cushion an effective sealing can be achieved. Such foam cushion can be used as an alternative or in combination with an inflatable cushion as mentioned earlier. This also provides an effective sealing functionality.

In a further preferred embodiment of the invention the sealing element comprises a number of strips or lamellae.

Providing the sealing element with a number of strips or lamellae that are connected to each other, it is possible to move the sealing element from the sealing and substantially vertical position to a lower and substantially horizontal position. This enables an effective storage of the sealing element in a non-sealing home position without requiring additional space of the dock. In one of the presently preferred embodiments this use of strips or lamellae is applied in combination with a cylinder that can also be provided in a substantially horizontal position below the dock. This provides an effective sealing assembly that does not require additional space of the dock.

In a further preferred embodiment of the sealing assembly it further comprises a sensor which is configured for monitoring the position of the sealing assembly relative to the vehicle.

By providing a sensor it is possible to monitor the actual position of the sealing assembly relative to the vehicle. This improves control of the actual sealing functionality. Optionally, the sensor is coupled to a (central) controller and, if needed, appropriate action can be taken. In some embodiments such appropriate action may involve controlling fan speed, for example.

In a further preferred embodiment of the invention, the sealing assembly further comprises side seals configured for sealing the sides of the dock at the vehicle, and a top seal, configured for sealing the top of the upper edge of the dock against the vehicle.

Providing side seals and a top seal enables sealing the dock at all sides against the vehicle. This provides an efficient and effective sealing functionality. In fact, this provides an effective four-sided seal.

The invention also relates to a dock for loading and/or unloading a vehicle at the dock, wherein the dock comprises a sealing assembly according to one of the aforementioned embodiments, and further also relates to a distribution center comprising one or more of such docks.

The dock and/or distribution center provided with such dock provide(s) the same effects and advantages as described in relation the sealing assembly.

The invention further also relates to a method for sealing a vehicle at a dock, the method comprising the steps of:
- providing a sealing assembly in one of the aforementioned embodiments; and
- when docking a vehicle, position the sealing assembly relative to the vehicle, thereby providing a sealing functionality with a substantially constant and substantially continuous pressure.

The method provides the same effects and advantages as described in relation to the sealing assembly, dock and/or distribution center.

In a presently preferred embodiment a vehicle is parked at a dock. The drive, preferably involving weights, moves the sealing assembly towards its sealing position, preferably until it engages the vehicle, leveler and/or other dock part. Optionally, other (side and top) seals are activated. Bumpers are retracted and vehicle doors are opened. The leveler can now be positioned in the cargo space of the vehicle and the bottom seal can be moved to its sealing position.

Further advantages, features and details of the invention are elucidated on the basis of preferred embodiments thereof, wherein reference is made to the accompanying drawings, in which:
- Figure 1 shows a dock with a sealing assembly according to the present invention and a docking vehicle;
- Figure 2 shows details of a sealing pressure element in an embodiment of the sealing assembly;
- Figure 3 A-C shows details of a drive in an embodiment of the sealing assembly in a sealing (upper) and retracted (lower) position;
- Figure 4 shows a foam cushion in an embodiment of the sealing assembly; and
- Figure 5 shows an inflatable sealing cushion in an alternative embodiment of the sealing assembly.

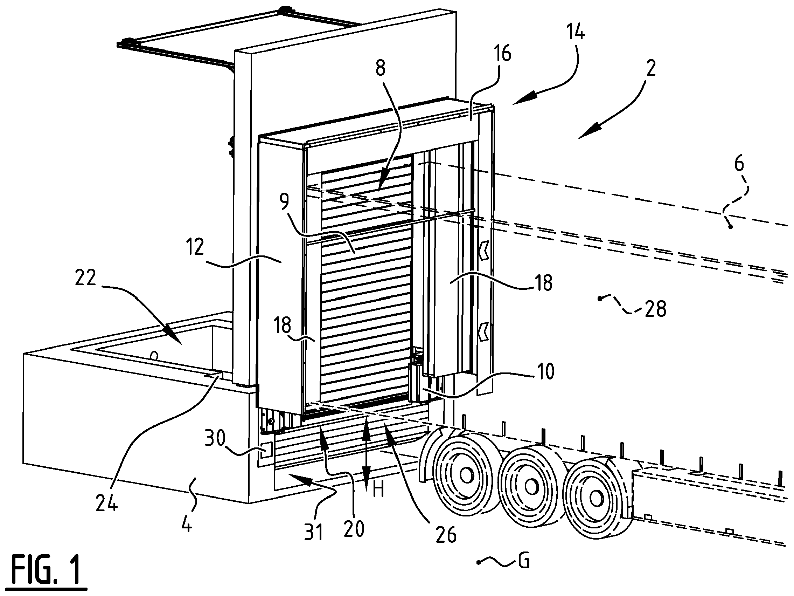

Dock 2 (figure 1) is part of distribution center 4 and enables vehicle 6 to load/unload goods. Dock 2 comprises opening 8 with door 9 and two bumpers 10 at the sides thereof. In the extended position of bumpers 10, vehicle 6 may engage bumpers 10. Dock 2 further comprises shelter 12 and dock sealing system 14. In the illustrated embodiment sealing system 14 comprises top seal 16, two side seals 18, and sealing assembly 20 acting as bottom or lower seal.

Furthermore, dock 2 is provided with dock leveller 22 and two door recesses 24. Bottom 26 of cargo space 28 of vehicle 6 is positioned at a height H above driveway G. bottom seal detector 30 is in the illustrated embodiment provided at the front of dock 2. Below dock 2 tail lift room 31 is provided to enable docking of vehicles that have such a tail lift.

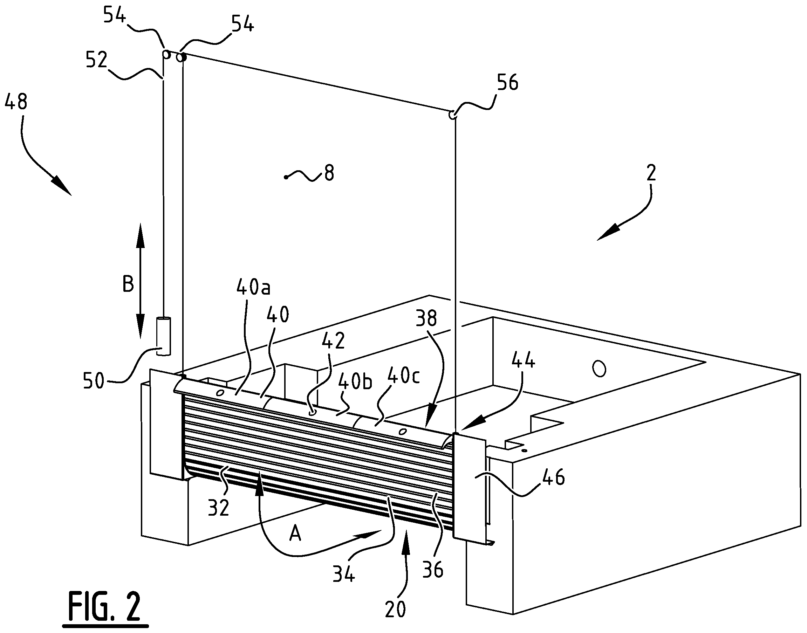

Sealing assembly 20 (fig. 2) comprises sealing element 32. Sealing element 32 comprises a number of substantially horizontally extending strips or lamellae 34 that are connected with hinges or other type of connections 36. At upper edge 38 of sealing element 32 there is provided sealing cushion 40. In the illustrated embodiment, sealing cushion 40 comprises three cushion parts 40a, 40b, 40c that are releasable connected to upper edge 38 with releasable connectors 42. It will be understood that other types of (preferably) releasable connectors 42 can be provided in accordance with the present invention. It will also be understood that another number of parts 40a, 40b, 40c can also be provided, including a number of parts varying between 1 to 10.

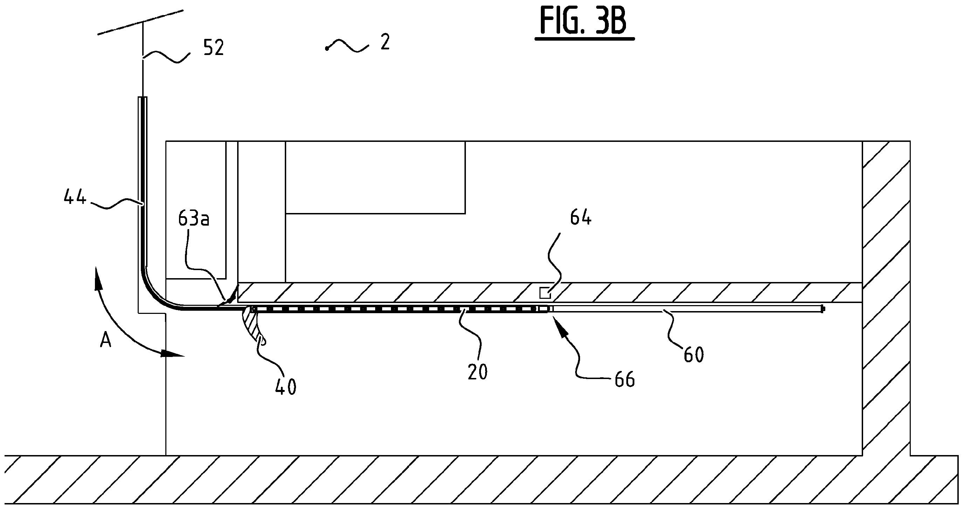

Sealing element 32 moves in guides 44 (fig. 3 B) that are connected to frame 46 (fig. 2) of sealing assembly 20. In the illustrated embodiment sealing assembly 32 moves between a substantially horizontal non-sealing position below dock 2 and a substantially vertical direction substantially in the plane of dock opening 8 in direction A. In the illustrated embodiment sealing pressure element 48 comprises weight 50 that is movable in direction B that substantially extends in a vertical direction. Weight 50 is connected via ropes, cables or lines 52 and a number of pulleys 54 to one side of sealing element 32 and with additional pulleys 56 to the opposite side of sealing element 32. It will be understood that a different number of weights 50 can be applied and/or could be envisaged to have separate weights on the opposite sides of sealing elements 32. The advantage of a combined weight 50 for both sides is that sealing element 32 maintains a substantially straight orientation.

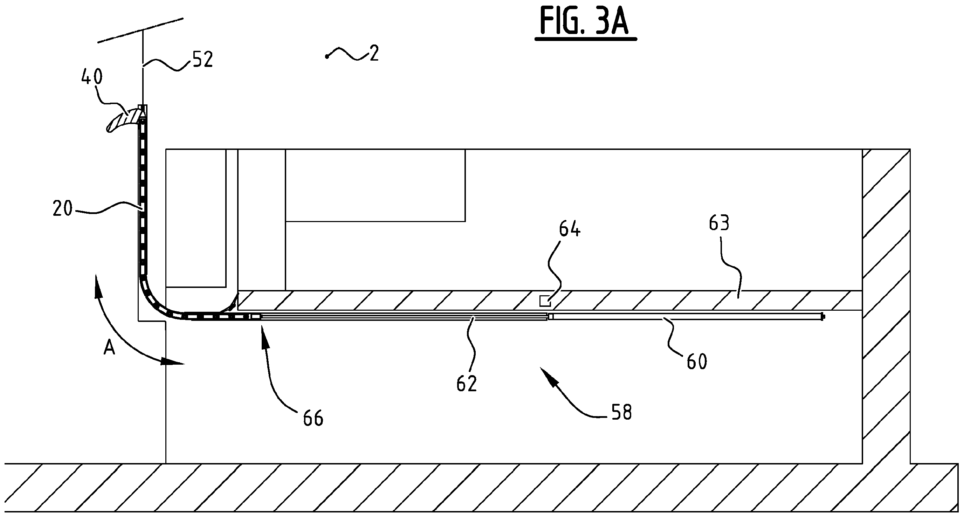

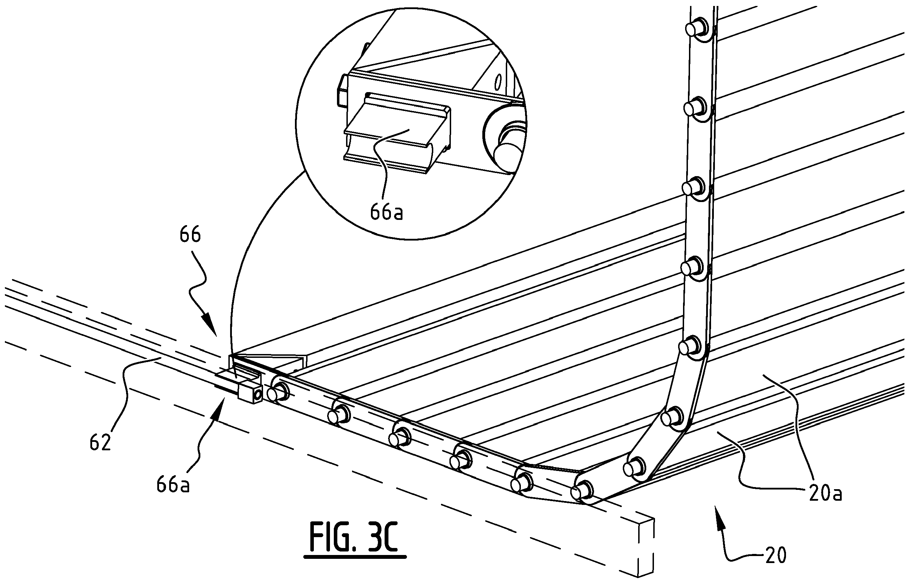

In one of the illustrated embodiments cylinder 58 (fig. 3 A-B) acts as drive of sealing element 20. Cylinder 58 comprises cylinder housing 60 and piston 62 and is placed below floor 63 of dock 2, wherein floor 63 is preferably provided as or from iso-panel. Floor 63 is preferably provided at an angle to improve draining during cleaning possibilities. Preferably cleaning elements 63a are provided to clean sealing assembly 20 when retracting. Cleaning elements 63a may comprise flaps or other suitable elements. Cylinder position detector 64 detects the retracted position of cylinder 58 to provide an additional safety measure. The outer end of piston 62 is attached via engagement mechanism 66 to sealing element 20. In the illustrated embodiment engagement mechanism 66 transfers the pushing or pulling force from cylinder 58 to sealing element 20. When sealing element 20 touches bottom 26 of vehicle 6, leveler 22 and/or other parts of dock 2, sealing element 20 stops moving in an upward direction as it is blocked. By preferably providing engagement mechanism 66 as a flexible/adjusting mechanism having catch 66a (fig. 3 C), piston 62 may continue moving to its maximal stroke position. This enables the use of a cost effective cylinder 58. In addition, it enables sealing assembly 20 to follow any movement of the vehicle during loading/unloading. This provides a substantially continuous sealing as a substantially constant sealing pressure on the vehicle, leveler and/or dock can be applied. When retracting sealing assembly 20 piston 62 is retracted. When piston 62 engages catch 66a also sealing assembly 20 with lamellae 20a starts retracting.

In a retracted position (fig. 3 B) piston 62 is retracted in cylinder housing 60. Sealing element 20 is brought into a substantially horizontal position below dock 2. When comparing the retracted position (fig. 3 B with the (upper) sealing position (fig. 3b), sealing element 20 has moved over guides 44 in a direction A. It will be understood that other movements can also be envisaged in accordance with the present invention.

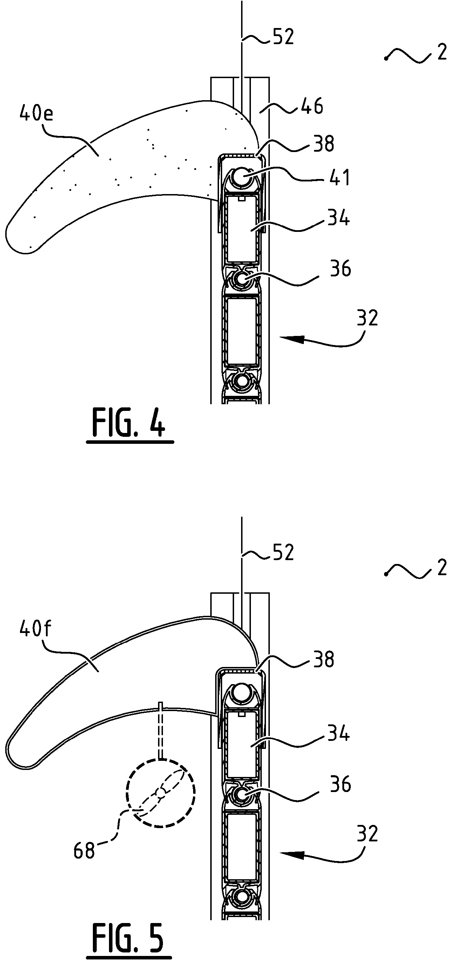

In one of the presently preferred embodiments sealing cushion 40e (fig. 4) is provided at upper edge 38 of sealing element 32. Sealing cushion 40e is in the illustrated embodiment shaped as a finger extending from sealing element 32 extending in an outward direction from dock 2. Optionally, sealing cushion 40e is rotatable around axis or shaft 41. This reduces the required space when retracting sealing assembly 20. It will be understood that such rotation can also be envisaged for other embodiments of sealing assembly 20.

In an alternative embodiment inflatable seal 40f (fig. 5) extends in a similar manner from sealing element 32. Inflatable seal 40e is operatively connected to van 68. It will be understood that other shapes for cushion 40, 40e, 40f, can be envisaged in accordance with the present invention.

After vehicle 6 is positioned at dock 2, engaged bumpers 10 (figure 1), and has come to a complete standstill, sealing system 14 can be activated. In the illustrated embodiment sealing system 14 is (partly) inflated. Top seal 16 and side seals 18 seal top and sides of dock opening 8 against vehicle 6. Sealing assembly 20 is activated and drive cylinder 60 allows sealing element to move from the lower/retracted horizontal non-sealing position (figure 3B) into (upper) vertical sealing position driven by weights 50 (figure 3A). Weights 50 provide a constant pressure from cushion 40, 40a, 40b on bottom 26 of cargo space 28 of vehicle 6. This provides a four-sided seal between dock opening 8 and vehicle 6.

In the illustrated embodiment, bumpers 10 are retracted after sealing system 14 has been activated/inflated. Furthermore, in the illustrated leveller 22 can be brought into loading/unloading position such that goods can be transferred between building 4 to cargo space 28 of vehicle 6. In the illustrated embodiment building 4 is provided with door recesses 24 that are configured to receive vehicle doors (not shown) of vehicle 6.

After goods have been loaded/unloaded from and/or to vehicle 6, leveller 22 is retracted and doors of vehicle 6 are closed. Seals 16, 18 and 20 are deactivated and/or retracted and vehicle 6 is allowed to ride away from dock 2.

The present invention is by no means limited to the above described preferred embodiments thereof. The rights sought are defined by the following claims within the scope of which many modifications can be envisaged.

## Claims

1. Sealing assembly for a dock, comprising:
- a frame provided with connectors for connecting the sealing assembly to the dock;
- a sealing element having an upper edge with the sealing element arranged for moving between a retracted non-sealing position and a sealing position;
- a drive configured for moving the sealing element between the sealing and retracted positions;
- a deformable sealing cushion configured for sealing against a vehicle; and
- a sealing pressure element that is operatively connected to the sealing element and is configured to provide a substantially constant and continuous sealing pressure from the sealing element.

2. Sealing assembly according to claim 1, wherein the sealing pressure element comprises one or more weights and wherein the sealing pressure element further preferably comprising a pulley.

3. Sealing assembly according to claim 1 or 2, wherein the drive is configured to moving the sealing element from a retracted position, wherein the sealing assembly extends in a substantially horizontal direction, into a substantial vertical sealing position.

4. Sealing assembly according to claim 1, 2 or 3, wherein the drive comprises a cylinder.

5. Sealing assembly according to claim 4, further comprising an engagement mechanism configured for connecting the cylinder to the sealing element such that the cylinder is capable of reaching its end position with maximum stroke, while the sealing element stops as it engages a structural element such as a cargo space bottom, leveler and/or shelter.

6. Sealing assembly according to any of the foregoing claims, further comprising releasable connectors for releasable connecting the cushion to the upper edge of the sealing element.

7. Sealing assembly according to any of the foregoing claims, wherein the cushion comprises separate cushion parts.

8. Sealing assembly according to any of the foregoing claims, wherein the deformable sealing cushion comprises an inflatable cushion, further preferably comprising a fan adapted for inflating the inflatable cushion.

9. Sealing assembly according to any of the foregoing claims, wherein the deformable sealing cushion comprises a foam cushion.

10. Sealing assembly according to any of the foregoing claims, wherein the sealing element comprises a number of strips or lamellae.

11. Sealing assembly according to any of the foregoing claims, further comprising a sensor configured for monitoring the position of the sealing assembly relative to the vehicle.

12. Sealing assembly according to any of the foregoing claims, further comprising side seals configured for sealing the sides of the dock against the vehicle and a top seal configured for sealing the top of the dock against the vehicle.

13. Dock comprising a sealing assembly according to any of the foregoing claims.

14. Distribution center comprising a number of docks comprising a sealing assembly according to any of the foregoing claims.

15. Method for sealing a dock against a vehicle, comprising the steps of:
- providing a sealing assembly according to any of the foregoing claims 1-12; and
- when docking a vehicle positioning the sealing assembly relative to the vehicle.
